# EUROPÄISCHE PATENTANMELDUNG

(11) **EP 4 249 217 A2**
(43) Veröffentlichungstag der Anmeldung: **27.09.2023**
(21) Anmeldenummer: 23162762.1
(22) Anmeldetag: 20.03.2023
(51) Int. Cl.: B29C 64/307, B33Y 50/00

(54) **VERFAHREN ZUM BETREIBEN ODER ÜBERWACHEN EINER ADDITIVEN FERTIGUNGSVORRICHTUNG**

(30) Priorität: 24.03.2022 DE 102022107007
(71) Anmelder: KRONES AG, 93073 Neutraubling (DE)
(72) Erfinder: ALLGEIER, Stephanie, 93073 Neutraubling (DE); DOBLINGER, Christian, 93073 Neutraubling (DE); LOERCHER, Katharina, 93073 Neutraubling (DE)
(74) Vertreter: v. Bezold & Partner Patentanwälte - PartG mbB

(57) **Zusammenfassung**

Die Erfindung betrifft u.a. ein Verfahren zum Betreiben einer additiven Fertigungsvorrichtung (20) auf. Das Verfahren weist ein Senden einer Produktkennungsinformation, die eine Fertigungsmaterialprodukteinheit, vorzugsweise eine Materialfilamentspule, einen Behälter mit Flüssigmaterial oder einen Behälter mit Pulvermaterial, identifiziert, auf. Das Verfahren weist ferner ein Empfangen einer Freigabeinformation zum Freigeben der additiven Fertigungsvorrichtung (20) in Reaktion auf das Senden der Produktkennungsinformation auf.

## Beschreibung

### Technisches Gebiet

Die Erfindung betrifft ein Verfahren zum Betreiben einer additiven Fertigungsvorrichtung. Die Erfindung betrifft ferner ein Verfahren zum Überwachen eines Betriebs einer additiven Fertigungsvorrichtung. Zudem betrifft die Erfindung ein System zum Ausführen des Verfahrens zum Betreiben einer additiven Fertigungsvorrichtung oder des Verfahrens zum Überwachen eines Betriebs einer additiven Fertigungsvorrichtung.

### Technischer Hintergrund

Der Einsatz von additiver Fertigung für die Vor-Ort-Versorgung von Kunden mit Ersatzteilen oder Verschleißteilen birgt das Potential, Anlagenstillstandzeiten und Lagerkosten erheblich zu verringern. Bspw. kann der Kunde direkt vor Ort ein entsprechendes Ersatzteil oder Verschleißteil für die Anlage additiv fertigen lassen, wenn das Teil benötigt wird.

Beispielsweise offenbart die DE 10 2015 006 512 A1 ein Verfahren zum Herstellen von Ersatzteilen für eine Maschine zur Herstellung von Verpackungen für eine rauchbare Produkte-Verpackungsmaschine mit folgenden Schritten: a) Verschlüsseln von für die Produktion des Ersatzteils erforderlichen, digitalen Produktionsdaten, b) Übermitteln der verschlüsselten Produktionsdaten von einer ersten, insbesondere dem Hersteller der Maschine zugeordneten Recheneinheit, zu einer zweiten, insbesondere dem Benutzer der Maschine zugeordneten Recheneinheit per Datenfernübertragung, vorzugsweise über ein Kommunikationsnetzwerk, etwa das Internet, c) Entschlüsseln der übermittelten, verschlüsselten Produktionsdaten, d) Herstellen des Ersatzteils mit einer dem Maschinenbenutzer zugeordneten, einen 3D-Drucker umfassenden Ersatzteilherstelleinrichtung nach Maßgabe der übermittelten Produktionsdaten.

Die Vor-Ort-Versorgung von Kunden mit Ersatzteilen oder Verschleißteilen durch den Einsatz von additiver Fertigung birgt jedoch auch gewisse Risiken. Beispielsweise kann ein Kunde beim Einlegen einer Materialfilamentspule in die additive Fertigungsvorrichtung die Materialfilamentspulen verwechseln und eine falsche Materialfilamentspule mit bspw. einem falschen Material verwenden. Dies kann dazu führen, dass die additive Fertigungsvorrichtung selbst nicht funktioniert, da die verschiedenen Filamente verschiedene Temperaturen, etc. benötigen können, um überhaupt druckbar zu sein. Zum anderen kann es vorkommen, dass der Kunde nach dem additiven Fertigen ein augenscheinlich passendes Bauteil bzw. Ersatzteil in die Maschine einbaut, das Bauteil allerdings nicht den entsprechenden Einflüssen in der Maschine standhält, da es aus dem falschen Material additiv gefertigt wurde.

Der Erfindung liegt die Aufgabe zu Grunde, eine verbesserte Technik zum Betreiben oder Überwachen einer additiven Fertigungsvorrichtung zu schaffen, mit der vorzugsweise die oben genannten Nachteile überwunden werden können.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft ein (z. B. computergestütztes) Verfahren zum Betreiben einer additiven Fertigungsvorrichtung (z. B. 3D-Drucker), vorzugsweise einer Behälterbehandlungsanlage (z. B. als Ersatzteil-Fertigungsvorrichtung), zum additiven Fertigen eines Bauteils. Das Verfahren weist ein Senden einer Produktkennungsinformation, die eine Fertigungsmaterialprodukteinheit, vorzugsweise eine Materialfilamentspule, einen Behälter mit Flüssigmaterial oder einen Behälter mit Pulvermaterial, (z. B. eindeutig oder chargenbezogen) identifiziert. Das Verfahren weist ferner ein Empfangen einer Freigabeinformation zum Freigeben der additiven Fertigungsvorrichtung in Reaktion auf das Senden der Produktkennungsinformation auf.

Vorteilhaft kann das Verfahren verhindern, dass die additive Fertigungsvorrichtung mit dem falschen Material bzw. der falschen Fertigungsmaterialprodukteinheit betrieben wird. Die falsche Fertigungsmaterialprodukteinheit kann von dem System, das die Produktkennungsinformation empfängt, erkannt und entsprechend mit der Freigabeinformation rückgemeldet werden. Gleichermaßen kann von dem System, das die Produktkennungsinformation empfängt, erkannt werden, dass die richtige Fertigungsmaterialprodukteinheit verwendet werden soll und dies ebenfalls mittels der Freigabeinformation rückgemeldet werden. Vorteilhaft kann so sichergestellt werden, dass das richtige Material für ein additiv zu fertigendes Bauteil benutzt wird, was sich vorteilhaft auf die Bauteil-, die Produkt- und/oder die Produktionssicherheit (z.B. Lagerhaltung, richtiges Bauteil in der Maschine, etc.) auswirken kann. Zusätzlich kann das Verfahren eine automatisierte Materialversorgung unterstützen, wodurch sich anwenderseitig Zeit und Ressourcen einsparen lassen sowie sichergestellt werden kann, dass es nicht zu Materialengpässen kommt. Diese automatisierte Materialversorgung kann dadurch unterstützt werden, dass aufgrund der Zuordnung der Produktkennungsinformationen zu verfügbaren Fertigungsmaterialprodukteinheiten bekannt ist, wie viele Fertigungsmaterialprodukteinheiten dem Anwender noch zur Verfügung stehen.

Beispielsweise kann die Produktkennungsinformation von einem ersten (z. B. Computer-) System zu einem zweiten (z. B. Computer-) System gesendet werden.

Vorzugsweise kann die Freigabeinformation von dem ersten System empfangen werden, z. B. gesendet von dem zweiten System.

Bevorzugt kann das erste System eine Recheninfrastruktur und/oder die additive Fertigungsvorrichtung aufweisen.

Bevorzugt kann das zweite System eine Recheninfrastruktur, eine Cloud-Infrastruktur und/oder ein virtuelles Lager aufweisen.

Vorzugsweise können das erste System und das zweite System miteinander über ein Kommunikationsnetzwerk (z. B. das Internet) zur Datenübertragung, vorzugsweise Datenfernübertragung, miteinander kommunizieren.

In einem Ausführungsbeispiel weist das Verfahren ferner ein Freigeben der additiven Fertigungsvorrichtung zum additiven Fertigen des Bauteils mittels der Fertigungsmaterialprodukteinheit, die von der Produktkennungsinformation identifiziert ist, in Abhängigkeit von der empfangenen Freigabeinformation auf. Optional kann das Verfahren ferner ein additives Fertigen des Bauteils mittels der Fertigungsmaterialprodukteinheit, die von der Produktkennungsinformation identifiziert ist, durch die freigegebene additive Fertigungsvorrichtung aufweisen.

Vorzugsweise kann das Freigeben und/oder das additive Fertigen mittels des ersten Systems erfolgen.

In einem weiteren Ausführungsbeispiel weist das Verfahren ferner ein Eingeben, Erfassen oder Auswählen der Produktkennungsinformation vor dem Senden der Produktkennungsinformation auf. Vorzugsweise kann die Produktkennungsinformation mittels einer Benutzerschnittstelle eingegeben werden oder eingebbar sein. Alternativ oder zusätzlich kann die Produktkennungsinformation mittels einer (z. B. optischen) Sensorik (z. B. des ersten Systems) oder einer (z. B. RFID-, NFC usw.) Kommunikationsschnittstelle (z. B. des ersten Systems) erfasst werden oder erfassbar sein. Alternativ oder zusätzlich kann die Produktkennungsinformation in einer Benutzeroberfläche (z. B. einer Webservervorrichtung des zweiten Systems) ausgewählt werden oder auswählbar sein.

Vorzugsweise kann das Eingeben, Erfassen oder Auswählen der Produktkennungsinformation mittels des ersten Systems und/oder des zweiten Systems erfolgen.

In einem weiteren Ausführungsbeispiel ist die Fertigungsmaterialprodukteinheit aus einer Mehrzahl von Fertigungsmaterialprodukteinheiten, die jeweils mit einer Produktkennungsinformation zum (z. B. eindeutigen oder chargenbezogenen) Identifizieren der jeweiligen Fertigungsmaterialprodukteinheit gekennzeichnet sind (z. B. mittels Einprägen, Aufdrucken, Auflasern, Aufkleben, Taggen usw.), ausgewählt.

In einer Ausführungsform weist das Verfahren ferner ein Auswählen eines additiv zu fertigenden Bauteils, das mittels einer Bauteilkennungsinformation (z. B. eindeutig) identifiziert ist, in einer Bedienoberfläche (z. B. einer Webservervorrichtung des zweiten Systems) auf. Alternativ oder zusätzlich weist das Verfahren ferner ein Senden einer Bauteilkennungsinformation, die ein zum additiven Fertigen ausgewähltes Bauteil (z. B. eindeutig) identifiziert auf. Alternativ oder zusätzlich weist das Verfahren ferner ein Senden einer Bauteilinformation, die mindestens ein Geometriemerkmal und/oder mindestens ein Materialangabemerkmal eines zum additiven Fertigen ausgewählten Bauteils angibt, auf. Vorteilhaft können damit Zusatzinformationen vorliegen, auf deren Basis geprüft werden kann, ob die ausgewählte Fertigungsmaterialprodukteinheit, die von der Produktkennungsinformation identifiziert ist, für das zum additiven Fertigen geplante Bauteil geeignet ist.

Vorzugsweise kann das Auswählen des additiv zu fertigenden Bauteils mittels des ersten Systems unter Zugriff auf das zweite System erfolgen. Vorzugsweise kann die Bauteilkennungsinformation und/oder die Bauteilinformation von dem ersten System gesendet werden, z. B. zu dem zweiten System.

In einer weiteren Ausführungsform erfolgt das Empfangen der Freigabeinformation ferner in Reaktion auf das Auswählen des additiv zu fertigenden Bauteils, das Senden der Bauteilkennungsinformation und/oder das Senden der Bauteilinformation.

In einer weiteren Ausführungsform weist das Verfahren ferner ein Senden einer Materialverbrauchsinformation, die einen erfassten oder geschätzten Materialverbrauch der Fertigungsmaterialprodukteinheit beim additiven Fertigen des Bauteils aus der Fertigungsmaterialprodukteinheit angibt, auf. Alternativ oder zusätzlich kann das Verfahren ferner ein Senden einer Herstellungsfortschrittinformation, die einen Herstellungsfortschritt und/oder eine Fertigstellung des additiv zu fertigenden Bauteils angibt, aufweisen. Vorteilhaft können diese Informationen dazu verwendet werden, eine virtuelle bzw. geschätzte Materialmenge der Fertigungsmaterialprodukteinheit im virtuellen Lager zu aktualisieren.

Vorzugsweise kann die Materialverbrauchsinformation und/oder die Herstellungsfortschrittinformation von dem ersten System gesendet werden, z. B. zu dem zweiten System.

In einer weiteren Ausführungsform weist das Verfahren ferner ein Empfangen mindestens eines Betriebsparameters (z. B. Fertigungsgeschwindigkeit und/oder Fertigungstemperatur) zum Betreiben der additiven Fertigungsvorrichtung in Reaktion auf das Senden der Produktkennungsinformation und optional ein Betreiben der additiven Fertigungsvorrichtung in Abhängigkeit von dem empfangenen mindestens einen Betriebsparameter auf. Vorzugsweise kann damit der Betrieb der additiven Fertigungsvorrichtung bspw. optimal an das verwendete Material der Fertigungsmaterialprodukteinheiten, die von der Produktkennungsinformation identifiziert ist, angepasst werden.

Ein weiterer Aspekt der vorliegenden Offenbarung betrifft ein (z. B. computergestütztes) Verfahren zum Überwachen eines Betriebs einer additiven Fertigungsvorrichtung (z. B. 3D-Drucker), vorzugsweise einer Behälterbehandlungsanlage (z. B. als Ersatzteil-Fertigungsvorrichtung), zum additiven Fertigen eines Bauteils. Das Verfahren weist ein Empfangen einer Produktkennungsinformation, die eine Fertigungsmaterialprodukteinheit, vorzugsweise eine Materialfilamentspule oder einen Behälter mit Flüssig- oder Pulvermaterial, (z. B. eindeutig oder chargenbezogen) identifiziert. Das Verfahren weist ferner ein Prüfen der empfangenen Produktkennungsinformation und/oder mindestens einer der empfangenen Produktkennungsinformation zugeordneten Information auf. Zudem weist das Verfahren ein Senden einer Freigabeinformation in Abhängigkeit von dem Prüfen auf. Vorteilhaft lassen sich mit dem Verfahren zum Überwachen des Betriebs der additiven Fertigungsvorrichtung die gleichen Vorteile erzielen, die bereits unter Bezugnahme auf das Verfahren zum Betreiben der Fertigungsvorrichtung erläutert wurden. Entsprechendes gilt für die untenstehenden bevorzugten Ausführungsbeispiele usw..

Vorzugsweise kann die Produktkennungsinformation von einem zweiten System empfangen werden, bevorzugt gesendet von einem ersten System.

Beispielsweise kann die empfangene Produktkennungsinformation und/oder die mindestens eine der empfangenen Produktkennungsinformation zugeordnete Information mittels des zweiten Systems geprüft werden.

Bevorzugt kann die Freigabeinformation von dem zweiten System gesendet werden, zum Beispiel an das erste System.

In einem Ausführungsbeispiel wird beim Prüfen der Produktkennungsinformation die Produktkennungsinformation auf Zulässigkeit, auf Übereinstimmung mit einem Eintrag in einer Liste von zulässigen Produktkennungsinformationen und/oder auf ein Vorhandensein in einem virtuellen Lager geprüft. Vorteilhaft kann auf diese Weise geprüft werden, ob die Produktkennungsinformation überhaupt korrekt ist, ob der Anwender zum Verwenden der Fertigungsmaterialprodukteinheit, die von der Produktkennungsinformation identifiziert ist, überhaupt autorisiert ist und/oder ob die Fertigungsmaterialprodukteinheit, die von der Produktkennungsinformation identifiziert ist, überhaupt autorisiert ist.

In einem weiteren Ausführungsbeispiel weist das Verfahren ferner ein Abrufen einer Ist-Produktinformation, die der empfangenen Produktkennungsinformation zugeordnet ist, vorzugsweise aus einer Datenbank, auf, wobei die abgerufene Ist-Produktinformation geprüft wird (z. B. auf ein Erfüllen einer vorgegebenen Soll-Produktinformation). Vorteilhaft kann somit beispielsweise geprüft werden, ob das Material, der Materialtyp und/oder die Materialmenge der Fertigungsmaterialprodukteinheit, die von der Produktkennungsinformation identifiziert ist, für die geplante additive Fertigung geeignet ist oder nicht.

Vorzugsweise kann die Ist-Produktinformation mittels des zweiten Systems abgerufen werden.

In einer Ausführungsform weist das Prüfen der abgerufenen Ist-Produktinformation ein Prüfen einer Ist-Produktmaterialmengeninformation der Ist Produktinformation und/oder einer Ist-Produktmaterialangabeinformation der Ist-Produktinformation auf.

Vorzugsweise kann das zweite System die Ist-Produktmaterialmengeninformation und/oder die Ist-Produktmaterialangabeinformation prüfen.

In einer weiteren Ausführungsform erfolgt das Prüfen der abgerufenen Ist-Produktinformation in Bezug auf eine Soll-Produktinformation, vorzugsweise aufweisend eine Soll-Produktmaterialmengeninformation und/oder eine Soll-Produktmaterialangabeinformation.

In einer weiteren Ausführungsform weist das Verfahren ferner ein Aktualisieren der Ist-Produktinformation, vorzugsweise der Ist-Produktmaterialmengeninformation, in Abhängigkeit von dem Prüfen und/oder Senden, einem Empfangen einer Materialverbrauchsinformation, einem Empfangen einer Herstellungsfortschrittinformation und/oder einer Soll-Produktmaterialmengeninformation auf. Vorteilhaft kann damit bspw. ein Lagerbestand im virtuellen Lager aktuell gehalten werden.

Vorzugsweise kann das zweite System die Ist-Produktinformation aktualisieren.

Beispielsweise kann das zweite System die Materialverbrauchsinformation und/oder die Herstellungsfortschrittinformation empfangen, zum Beispiel von dem ersten System.

In einer weiteren Ausführungsform weist das Verfahren ferner ein Empfangen einer Bauteilkennungsinformation, die ein zum additiven Fertigen ausgewähltes Bauteil (z. B. eindeutig) identifiziert, und/oder einer Bauteilinformation, die mindestens ein Geometriemerkmal und/oder mindestens ein Materialmerkmal (z.B. Materialangabe oder Materialmenge) eines zum additiven Fertigen ausgewählten Bauteils angibt, auf, wobei die Soll-Produktinformation abhängig von der empfangenen Bauteilkennungsinformation und/oder der empfangenen Bauteilinformation ist (z. B. abhängig von diesen abgerufen wird). Vorteilhaft kann damit beispielsweise erreicht werden, dass bauteilspezifisch geprüft werden kann, ob das richtige Material, der richtige Materialtyp und/oder die richtige Materialmenge von der Fertigungsmaterialprodukteinheit, die von der Produktkennungsinformation identifiziert ist, bereitgestellt werden kann.

Vorzugsweise kann das zweite System die Bauteilkennungsinformation empfangen, zum Beispiel gesendet von dem ersten System oder ausgewählt mittels des ersten Systems unter Zugriff auf das zweite System.

Bevorzugt kann das zweite System die Bauteilinformation empfangen, zum Beispiel gesendet von dem ersten System.

In einer Ausführungsvariante weist das Verfahren ferner ein Senden mindestens eines Betriebsparameters (z. B. Fertigungsgeschwindigkeit und/oder Fertigungstemperatur) zum Betreiben der additiven Fertigungsvorrichtung auf, wobei der mindestens eine Betriebsparameter abhängig von der empfangenen Produktkennungsinformation ist. Vorteilhaft kann damit eine optimale Einstellung der additiven Fertigungsvorrichtung an das Material der Fertigungsmaterialprodukteinheiten, die von der Produktkennungsinformation identifiziert ist, vorgenommen werden.

Vorzugsweise kann das zweite System den mindestens einen Betriebsparameter senden, zum Beispiel an das erste System.

In einer weiteren Ausführungsvariante weist das Verfahren ferner ein Senden einer Lagerbestandsinformation und/oder einer Bestellaufforderungsinformation, wenn ein Lagerbestand in einem virtuellen Lager einen vorgebbaren Mindestlagerbestand erreicht oder unterschreitet, auf.

Vorzugsweise kann das zweite System die Lagerbestandinformation oder die Bestellaufforderungsinformation senden, zum Beispiel an das erste System.

Ein weiterer Aspekt der vorliegenden Offenbarung betrifft ein Verfahren zum Betreiben und Überwachen eines Betriebs einer additiven Fertigungsvorrichtung. Das Verfahren kann Merkmale des hierin offenbarten Verfahrens zum Betreiben einer additiven Fertigungsvorrichtung und/oder des hierin offenbarten Verfahrens zum Überwachen eines Betriebs einer additiven Fertigungsvorrichtung aufweisen, zum Beispiel einzeln oder in jeglicher Kombination.

Ein weiterer Aspekt der vorliegenden Offenbarung betrifft ein (z. B. erstes oder zweites) System, das dazu konfiguriert ist, ein Verfahren wie hierin offenbart auszuführen.

Ein weiterer Aspekt der vorliegenden Offenbarung betrifft mehrere Systeme aufweisend ein erstes System und ein zweites System. Das erste System ist zum Ausführen eines Verfahrens zum Betreiben einer additiven Fertigungsvorrichtung wie hierin offenbart konfiguriert. Das zweite System ist zum Ausführen eines Verfahrens zum Überwachen eines Betriebs einer additiven Fertigungsvorrichtung wie hierin offenbart konfiguriert.

Vorzugsweise kann das erste System in einer Behälterbehandlungsanlage, z. B. zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel, umfasst sein. Beispielsweise können die Behälter als Flaschen, Dosen, Kanister, Kartons, Flakons usw. ausgeführt sein.

Vorzugsweise kann jegliche Information als Datensignal gesendet und/oder empfangen werden oder vorliegen.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügte Zeichnung beschrieben. Es zeigt:

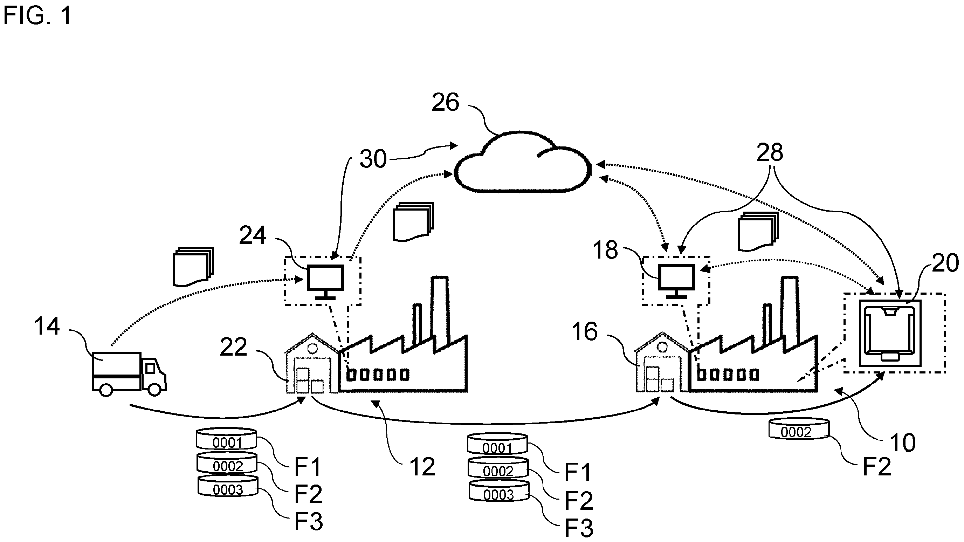

- Figur 1: eine schematische Darstellung unterschiedlicher Materialflüsse und unterschiedlicher Informationsflüsse.

### Detaillierte Beschreibung beispielhafter Ausführungsformen

Die Figur 1 zeigt eine beispielhafte Anwendungsumgebung. Dargestellt sind rein schematisch eine erste Industrieanlage 10, eine zweite Industrieanlage 12 und ein Lieferant 14.

In der Industrieanlage 10 können Artikel mittels mindestens einer Maschine produziert, verarbeitet und/oder gehandhabt werden. Bevorzugt ist die Industrieanlage 10 als eine Behälterbehandlungsanlage zum Behandeln von Behältern ausgeführt.

Die Industrieanlage 10 kann ein Lager 16, eine Recheninfrastruktur 18 und eine additive Fertigungsvorrichtung 20 aufweisen.

Im Lager 16 können bspw. die Artikel und/oder Rohstoffe für diese gelagert werden. In dem Lager 16 können zudem Fertigungsmaterialprodukteinheiten F1-F3 zum Versorgen der additiven Fertigungsvorrichtung 20 gelagert werden.

Die Recheninfrastruktur 18 kann mindestens einen Computer, bevorzugt ein (z. B. lokales) Netzwerk mit mehreren Computern und optional mindestens einen Server, aufweisen.

Mittels der additiven Fertigungsvorrichtung 20 können unterschiedliche Bauteile additiv gefertigt werden. Beim additiven Fertigen kann ein Bauteil in einer Vielzahl von übereinanderliegenden Materialschichten gefertigt werden. Beispielsweise kann die additive Fertigungsvorrichtung 20 ein 3D-Drucker sein. Material zum additiven Fertigen der Bauteile kann der additiven Fertigungsvorrichtung 20 mittels Fertigungsmaterialprodukteinheiten F1-F3 zur Verfügung gestellt werden. Je nach Ausführung der additiven Fertigungsvorrichtung 20 können als Fertigungsmaterialprodukteinheiten F1-F3 beispielsweise Materialfilamentspulen, Behälter mit Flüssigmaterial oder Behälter mit Pulvermaterial verwendet werden.

In der Industrieanlage 12 können Maschinen oder zumindest Baugruppen für Maschinen, die in der Industrieanlage 10 verwendet werden, produziert werden. Beispielsweise kann die Industrieanlage 12 zur Herstellung von Behälterbehandlungsvorrichtungen und/oder -anlagen ausgeführt sein.

Die Industrieanlage 12 kann ein Lager 22 und eine Recheninfrastruktur 24 aufweisen.

In dem Lager 22 können beispielsweise fertige Maschinen, fertige Baugruppen und/oder Teile zum Herstellen der Maschinen oder Baugruppen gelagert werden.

In dem Lager 22 können zudem Fertigungsmaterialprodukteinheiten F1-F3 zum Versorgen von additiven Fertigungsvorrichtungen (z. B. 20) gelagert werden. Die Fertigungsmaterialprodukteinheiten F1-F3 können von dem Lieferanten 14 bezogen werden. Rein beispielhaft ist in Figur 1 dargestellt, dass der Lieferant 14 drei Fertigungsmaterialprodukteinheiten F1-F3 in das Lager 22 der Industrieanlage 12 liefert. Bevorzugt unterscheiden sich die Fertigungsmaterialprodukteinheiten F1-F3 voneinander in Bezug auf eine Chargennummer, ein Material (z. B. BS, PLA, PETG, ASA, Nylon, TPE/Flex, PVA, HIPS; Kunstharz, Metalle etc.), ein Materialtyp (z. B. Filament, Pulver oder Flüssigkeit) und/oder eine Materialmenge.

Eine Besonderheit der Fertigungsmaterialprodukteinheiten F1-F3 besteht darin, dass diese jeweils mit einer Produktkennung versehen sind. Die Produktkennung kann beispielsweise an einem jeweiligen Behälter oder einer Verpackung der Fertigungsmaterialprodukteinheiten F1-F3 angeordnet sein (zum Beispiel aufgedruckt, aufgeklebt, eingeprägt, aufgelasert usw.). Im Falle von Materialfilamentspulen kann die Produktkennung beispielsweise an der Spule selbst angeordnet sein. Die Produktkennungen können in jeglicher Form vorliegen, zum Beispiel als alphanumerische Codes, Strichcodes (z. B. Barcodes), QR-Codes oder Tags (z. B. RFID-Tags) usw..

Mittels der Produktkennung kann die jeweilige Fertigungsmaterialprodukteinheit F1-F3 identifiziert werden. Bevorzugt können die Fertigungsmaterialprodukteinheiten F1-F3 eindeutig identifiziert werden, sodass die Fertigungsmaterialprodukteinheiten F1-F3 mittels der jeweils individuellen Produktkennung voneinander eindeutig unterscheidbar sind. Alternativ oder zusätzlich kann mittels der Produktkennungen beispielsweise eine chargenbezogene Identifikation der Fertigungsmaterialprodukteinheiten F1-F3 möglich sein.

Der Lieferant 14 kann die zu den ausgelieferten Fertigungsmaterialprodukteinheiten F1-F3 zugehörigen Produktkennungen als Produktkennungsinformationen an die Recheninfrastruktur 24 senden. Die Produktkennungsinformationen können als ein Datensatz gesendet werden. Zusammen mit den Produktkennungsinformationen können weitere Informationen zu den Fertigungsmaterialprodukteinheiten F1-F3 von dem Lieferanten 14 übersendet werden. Hierzu können bspw. eine Materialangabe, ein Materialtyp, eine Materialmenge (z. B. angegeben in Metern oder in Gramm) und/oder eine Chargennummer usw. zu den jeweiligen Fertigungsmaterialprodukteinheiten F1-F3 gehören. Die Recheninfrastruktur 24 kann die vom Lieferanten 14 gesendeten Produktkennungsinformationen und ggf. die weiteren Informationen empfangen.

Alternativ ist es beispielsweise möglich, dass die Fertigungsmaterialprodukteinheiten F1-F3 erst nach der Lieferung in das Lager 22 jeweils mit der Produktkennung versehen werden. Im Zusammenhang damit kann in der Recheninfrastruktur 24 eine digitale Liste von Fertigungsmaterialprodukteinheiten F1-F3 mit ihren Produktkennungen bzw. Produktkennungsinformationen und ggf. den weiteren Informationen geführt werden.

Die Recheninfrastruktur 24 kann mindestens einen Computer, bevorzugt ein (z. B. lokales) Netzwerk mit mehreren Computern und optional mindestens einen Server, aufweisen.

Die Recheninfrastrukturen 18, 24 können miteinander direkt und/oder mittelbar, zum Beispiel über eine Cloud-Infrastruktur 26, kommunizieren und Informationen austauschen. Bevorzugt kann die additive Fertigungsvorrichtung 20 mit der Recheninfrastrukturen 18 und/oder der Recheninfrastruktur 24 kommunizieren und Informationen austauschen. Die Kommunikation kann ebenfalls direkt und/oder mittelbar, zum Beispiel über die Cloud-Infrastruktur 26, erfolgen.

Um eine schnelle Ersatzteilversorgung für die Maschine(n) der Industrieanlage 10 zu ermöglichen, können Ersatzteile zumindest teilweise direkt vor Ort in der Industrieanlage 10 mittels der additiven Fertigungsvorrichtung 20 gefertigt werden. Bevorzugt im Vorfeld davon können die hierfür notwendigen Fertigungsmaterialprodukteinheiten F1-F3 in das Lager 16 der Industrieanlage 10 geliefert werden, zum Beispiel nach vorheriger Bestellung. Bevorzugt erfolgt die Lieferung aus dem Lager 22 der Industrieanlage 12. Alternativ oder zusätzlich kann die Lieferung beispielsweise auch direkt vom Lieferanten 14 erfolgen.

Im Lager 16 können damit mehrere Fertigungsmaterialprodukteinheiten F1-F3 gelagert sein. Bevorzugt sind mehrere Materialfilamentspulen in dem Lager 16 gelagert, die sich bspw. in Bezug auf ein Material und/oder eine Materialmenge voneinander unterscheiden. Die Materialfilamentspulen können durch ihre jeweils eigene Produktkennung voneinander unterscheidbar sein.

In der Recheninfrastruktur 24 und/oder Cloud-Infrastruktur 26 kann ein virtuelles Lager für die Industrieanlage 10 gespeichert sein. Beispielsweise können in der Recheninfrastruktur 24 und/oder Cloud-Infrastruktur 26 eine Vielzahl von virtuellen Lagern für unterschiedliche Kunden bzw. die Industrieanlage 10 und weitere Industrieanlagen (nicht in Figur 1 dargestellt) gespeichert sein.

In dem virtuellen Lager können die Produktkennungsinformationen derjenigen Fertigungsmaterialprodukteinheiten F1-F3, die zu dem Lager 16 geliefert wurden, gespeichert sein. Zusätzlich können, sofern vorhanden, weitere Informationen zu den mittels der Produktkennungsinformationen identifizierbaren Fertigungsmaterialprodukteinheiten F1-F3 gespeichert sein, wie z. B. die Materialangabe, der Materialtyp, die Materialmenge und/oder die Chargennummer. Im virtuellen Lager kann damit eine Übersicht über alle Fertigungsmaterialprodukteinheiten F1-F3, die im Lager 16 vorhanden sind, gespeichert sein. Die Übersicht kann unbenutzte bzw. ungeöffnete Fertigungsmaterialprodukteinheiten und bereits angebrochene bzw. angefangene Fertigungsmaterialprodukteinheiten aufweisen.

Bevorzugt kommen als additiv zu fertigende Ersatzteile bzw. Bauteile solche Teile in Betracht, die beispielsweise aufgrund von Verschleiß, Beschädigung und/oder in regelmäßigen Wartungsintervallen auszutauschen sind.

Bevorzugt ist das additiv zu fertigende Bauteil zur Verwendung in einer als Behälterbehandlungsanlage ausgeführten Industrieanlage 10 gedacht. Beispielsweise kann das Bauteil ein Bauteil einer Heizvorrichtung zum Heizen von Vorformlingen, einer Herstellvorrichtung, vorzugsweise Blasvorrichtung, zum Herstellen von Behältern, einer Reinigungsvorrichtung, vorzugsweise Rinsvorrichtung, zum Rinsen von Behältern, einer Beschichtungsvorrichtung zum Beschichten, vorzugsweise Innenbeschichten, von Behältern, einer Füllvorrichtung zum Befüllen von Behältern, vorzugsweise mit einem flüssigen oder pastösen Medium, einer Verschließvorrichtung zum Verschließen von Behältern, einer Etikettiervorrichtung zum Etikettieren von Behältern, einer Druckvorrichtung zum Bedrucken von Behältern, einer Verpackungsvorrichtung zum Verpacken von Behältern, einer Gruppiervorrichtung zum Gruppieren von Behältern oder einer Fördervorrichtung, vorzugsweise Linearfördervorrichtung oder Transportsternfördervorrichtung, zum Fördern von Behältern sein.

Besonders bevorzugt könnte das Bauteil bspw. ein Greifer oder Greiferarm zum Greifen eines Behälters, eine Klammer oder ein Klammerarm zum Halten eines Behälters, ein Format- oder Garniturteil, das an ein bestimmtes Behälterformat angepasst ist, ein Führungsgeländer, eine Führungswand usw. sein.

Eine Besonderheit der vorliegenden Offenbarung liegt in den Informationsflüssen, die zum Betreiben und Überwachen der additiven Fertigungsvorrichtung 20 ablaufen. Zum Betreiben und Überwachen der additiven Fertigungsvorrichtungen können Informationen bevorzugt zwischen den Industrieanlagen 10 und 12 bzw. zwischen deren Recheninfrastrukturen 18, 24 und optionaler Verwendung der Cloud-Infrastruktur 26 ausgetauscht werden. Allgemein und wie nachfolgend beschrieben, können die Informationen zwischen einem ersten (Computer-) System 28, das die Recheninfrastruktur 18 und/oder die additive Fertigungsvorrichtung 20 aufweist, und einem zweiten (Computer-) System 30, das die Recheninfrastruktur 24 und/oder die Cloud-Infrastruktur 26 aufweist, ausgetauscht werden. Der Informationsaustauch zwischen den Systemen 28 und 30 kann kabelgebunden und/oder kabellos erfolgen. Der Informationsaustausch zwischen den Systemen 28 und 30 kann bevorzugt über ein Kommunikationsnetzwerk zur Datenübertragung, beispielsweise das Internet, erfolgen.

Zunächst kann von einem Benutzer der additiven Fertigungsvorrichtung 20 eine entsprechende digitale Datei zum Betreiben der additiven Fertigungsvorrichtung 20 oder eine Berechtigung zum Verwenden einer bereits vorhandenen digitalen Datei erworben werden. Die digitale Datei oder die Berechtigung zu deren Verwendung kann bspw. von dem zweiten System 30 zu dem ersten System 28 gesendet werden oder bspw. unter Zwischenschaltung oder Nutzung einer Recheninfrastruktur eines Herstellers der additiven Fertigungsvorrichtung 20 zu dem ersten System 28 gesendet werden. Das erste System 28 kann die digitale Datei oder die Berechtigung empfangen. Die digitale Datei kann von der additiven Fertigungsvorrichtung 20 lesbar sein. Die digitale Datei kann Anweisungen aufweisen, die die additive Fertigungsvorrichtung 20 veranlassen, das gewünschte Bauteil in einer Vielzahl von Materialschichten additiv zu fertigen.

Beispielsweise kann ein Benutzer ein additiv zu fertigenden Bauteil in einer Bedienoberfläche, z. B. eines Webservers, des zweiten Systems 30 auswählen. Das ausgewählte Bauteil kann mittels einer Bauteilkennung bzw. einer Bauteilkennungsinformation bevorzugt eindeutig identifiziert werden. Es ist auch möglich, dass eine Bauteilkennungsinformation, die ein zum additiven Fertigen ausgewähltes Bauteil bevorzugt eindeutig identifiziert, von dem ersten System 28 zu dem zweiten System 30 gesendet wird. Das zweite System 30 kann die gesendete Bauteilkennungsinformation empfangen. Durch die Auswahl des additiv zu fertigenden Bauteils in der Bedienoberfläche oder durch den Empfang der Bauteilkennungsinformation kann somit im zweiten System 30 die Bauteilkennungsinformation vorliegen. Es ist ebenfalls möglich, dass bspw. von dem System 28 zu dem zweiten System 30 eine Bauteilinformation bezüglich eines zum additiven Fertigen ausgewählten Bauteils gesendet werden. Die Bauteilinformation kann bevorzugt mindestens ein Geometriemerkmal und/oder mindestens ein Materialangabemerkmal des zum additiven Fertigen ausgewählten Bauteils angeben.

Zum additiven Fertigen muss eine geeignete Fertigungsproduktmaterialeinheit, z. B. die Fertigungsproduktmaterialeinheit F2, aus den vorhandenen Fertigungsproduktmaterialeinheit F1-F3 ausgewählt und bspw. aus dem Lager 16 geholt werden. Die Produktkennung der ausgewählten Fertigungsproduktmaterialeinheit F2 wird als Produktkennungsinformation von dem ersten System 28 an das zweite System 30 gesendet. Das Senden der Produktkennungsinformation kann bspw. vor oder nach dem Verbinden der ausgewählten Fertigungsproduktmaterialeinheit F2 mit der additiven Fertigungsvorrichtung 20 erfolgen.

Die zu versendende Produktkennungsinformation kann vor dem Versenden beispielsweise eingegeben, erfasst oder ausgewählt werden. Vorzugsweise kann die Produktkennungsinformation mittels einer Benutzerschnittstelle des ersten Systems 28 eingegeben werden. Alternativ kann die Produktkennungsinformation beispielsweise mittels einer (z. B. optischen) Sensorik des ersten Systems 28 oder einer (z. B. RFID-, NFC usw.) Kommunikationsschnittstelle des ersten Systems 28 erfasst werden. Die optische Sensorik kann beispielsweise einen Code, wie beispielsweise einen Strichcode oder einen QR-Code, der ausgewählten Fertigungsmaterialprodukteinheit F2 erfassen. Die Kommunikationsschnittstelle kann beispielsweise ein RFID-Tag der ausgewählten Fertigungsmaterialprodukteinheit erfassen bzw. auslesen. Es ist auch möglich, dass die Produktkennungsinformation in einer Benutzeroberfläche, beispielsweise einer Webservervorrichtung, des zweiten Systems 30 mittels des ersten Systems 28 ausgewählt wird, z. B. aus dem virtuellen Lager.

Das zweite System 30 empfängt die gesendete Produktkennungsinformation. Nach dem Empfang der Produktkennungsinformation prüft das zweite System 30 die empfangene Produktkennungsinformation und/oder eine der empfangenen Produktkennungsinformation zugeordnete Information.

Beim Prüfen der Produktkennungsinformation kann die Produktkennungsinformation auf Zulässigkeit, auf Übereinstimmung mit einem Eintrag in einer Liste von zulässigen Produktkennungsinformation und/oder auf ein Vorhandensein im dem virtuellen Lager geprüft werden. Die Produktkennungsinformation kann beispielsweise zulässig sein, wenn sie im virtuellen Lager vorhanden ist und/oder wenn nachvollziehbar ist, dass die Fertigungsproduktmaterialeinheit, die von der empfangenen Produktkennungsinformation identifiziert ist, tatsächlich zuvor von einem Bediener der Industrieanlage 10 erworben und bspw. noch nicht verbraucht wurde. Die Prüfung der Produktkennungsinformation auf Zulässigkeit kann alterativ oder zusätzlich eine Plausibilitätsprüfung bezüglich der Zeichenfolge der Produktkennungsinformation aufweisen.

Alternativ oder zusätzlich zu dem Prüfen der Produktkennungsinformation kann mindestens eine der Produktkennungsinformation zugeordnete Information von dem zweiten System 30 geprüft werden. Hierzu kann beispielsweise eine Ist-Produktinformation, die der empfangenen Produktkennungsinformation zugeordnet ist, geprüft werden.

Die Ist-Produktinformation kann beispielsweise eine Ist-Produktmaterialmengeninformation und/oder eine Ist-Produktmaterialangabeinformation aufweisen. Die Ist-Produktmaterialmengeninformation kann beispielsweise angeben, wie groß die aktuelle Materialmenge der Fertigungsmaterialprodukteinheit (z. B. F2), die von der Produktkennungsinformation identifiziert ist, ist. Die Ist-Produktmaterialangabeinformation kann bspw. ein Material und/oder einen Materialtyp der Fertigungsmaterialprodukteinheit (z. B. F2), die von der Produktkennungsinformation identifiziert ist, angeben. Die Ist-Produktinformation kann bspw. aus einer Datenbank des zweiten Systems 30 und/oder aus dem virtuellen Lager abgerufen werden.

Das zweite System 30 kann die Ist-Produktinformation in Bezug auf eine Soll-Produktinformation prüfen. Die Soll-Produktinformation kann abhängig von der (z. B. empfangenen oder im zweiten System 30 vorliegenden) Bauteilkennungsinformation und/oder der empfangenen Bauteilinformation sein.

Beispielsweise kann der Bauteilkennungsinformation eine Soll-Produktmaterialmengeninformation zugeordnet sein. Die Soll-Produktmaterialmengeninformation kann angeben, wie groß eine erforderliche Materialmenge zum additiven Fertigen des Bauteils, das von der Bauteilkennungsinformation identifiziert ist, ist. Beim Prüfen der Ist-Produktmaterialmengeninformation auf ein Erfüllen der Soll-Produktmaterialmengeninformation kann das zweite System 30 prüfen, ob die ausgewählte Fertigungsmaterialprodukteinheit (z. B. F2) noch eine genügend große Materialmenge aufweist, um das zum additiven Fertigen ausgewählte Bauteil vollständig zu fertigen.

Alternativ oder zusätzlich kann der Bauteilkennungsinformation eine Soll-Produktmaterialangabeinformation zugeordnet sein. Die Soll- Produktmaterialangabeinformation kann angeben, aus welchem Material das Bauteil, das von der Bauteilkennungsinformation identifiziert ist, additiv zu fertigen ist. Beim Prüfen der Ist-Produktmaterialangabeinformation auf ein Erfüllen der Soll-Produktmaterialangabeinformation kann das zweite System 30 prüfen, ob die ausgewählte Fertigungsmaterialprodukteinheit (z. B. F2) das richtige Material für das zum additiven Fertigen ausgewählte Bauteil aufweist, z. B. einen vorbestimmten Kunststoff und/oder ein vorbestimmter Kunstharz.

In Abhängigkeit von dem Prüfen sendet das zweite System 30 eine Freigabeinformation an das erste System 28. Je nach Ergebnis des Prüfens kann die Freigabeinformation beispielsweise beinhalten, dass die additive Fertigungsvorrichtung 20 zum Fertigen des gewünschten Bauteils freigegeben oder nicht-freigegeben bzw. gesperrt wird.

Es ist möglich, dass das zweite System 30 zusätzlich zu dem Senden der Freigabeinformation mindestens einen Betriebsparameter zum Betreiben der additiven Fertigungsvorrichtung 20 an das erste System 28 sendet. Der mindestens eine Betriebsparameter kann abhängig von der empfangenen Produktkennungsinformation sein. Beispielsweise kann der mindestens eine Betriebsparameter aus einer Datenbank in Abhängigkeit von der empfangenen Produktkennungsinformation abgerufen werden. Der mindestens eine Betriebsparameter kann beispielsweise eine Fertigungsgeschwindigkeit und/oder eine Fertigungstemperatur (z. B. zum Aufschmelzen des Materials der Fertigungsmaterialprodukteinheit zum additiven Fertigen) aufweisen. Der mindestens eine Betriebsparameter kann auf das Material derjenigen Fertigungsmaterialprodukteinheit (z. B. F2) abgestimmt sein, die von der empfangenen Produktkennungsinformation identifiziert ist.

Das erste System 28 kann die Freigabeinformation und optional den mindestens einen Betriebsparameter in Reaktion auf das Senden der Produktkennungsinformation und optional in Reaktion auf das Auswählen des additiv zu fertigenden Bauteils, das Senden der Bauteilkennungsinformation und/oder das Senden der Bauteilinformation empfangen.

Die additive Fertigungsvorrichtung 20 kann in Abhängigkeit von der empfangenen Freigabeinformation zum additiven Fertigen des Bauteils mittels der Fertigungsmaterialprodukteinheit (z. B. F2), die von der gesendeten Produktkennungsinformation identifiziert ist, freigegeben oder gesperrt werden.

Bei Freigabe kann die entsprechende der Fertigungsmaterialprodukteinheit (z. B. F2) in die additive Fertigungsvorrichtung 20 eingelegt bzw. mit der additiven Fertigungsvorrichtung 20 verbunden werden. Es ist auch möglich, die entsprechende der Fertigungsmaterialprodukteinheit (z. B. F2) bereits zuvor mit der additiven Fertigungsvorrichtung 20 zu verbinden. Das Bauteil kann dann mittels der additiven Fertigungsvorrichtung 20 unter Verwendung der Fertigungsmaterialprodukteinheit (z. B. F2), die von der gesendeten Produktkennungsinformation identifiziert ist, additiv gefertigt werden.

Beim additiven Fertigen kann die additive Fertigungsvorrichtung 20 bevorzugt in Abhängigkeit von dem empfangenen mindestens einen Betriebsparameter betrieben werden, wenn gewünscht.

Das erste System 28 kann an das zweite System 30 eine Materialverbrauchsinformation und/oder einen Herstellungsfortschrittsinformation senden. Die Materialverbrauchsinformation kann bspw. einen erfassten oder geschätzten Materialverbrauch der Fertigungsmaterialprodukteinheit (z. B. F2) beim additiven Fertigen des Bauteils aus der Fertigungsmaterialprodukteinheit (z. B. F2), die von der gesendeten Produktkennungsinformation identifiziert ist, angeben. Die Herstellungsfortschrittsinformation kann bspw. einen Herstellungsfortschritt und/oder eine Fertigstellung des additiv zu fertigenden Bauteils angeben.

Das zweite System 30 kann die gesendete Materialverbrauchsinformation und/oder die gesendete Herstellungsfortschrittsinformation empfangen.

Das zweite System 30 kann die Ist-Produktmaterialmengeninformation in Abhängigkeit von der empfangenen Materialverbrauchsinformation und/oder der empfangenen Herstellungsfortschrittsinformation aktualisieren. So kann bspw. die Ist-Produktmaterialmengeninformation um diejenige Materialmenge verringert werden, die von der empfangenen Materialverbrauchsinformation angeben ist oder um die Soll-Produktmaterialmengeninformation, wenn die Herstellungsfortschrittsinformation angibt, dass das additiv zu fertigende Bauteil vollständig hergestellt wurde.

Alternativ oder zusätzlich kann das zweite System 30 die Ist-Produktmaterialmengeninformation aktualisieren und bspw. um die Soll-Produktmaterialmengeninformation verringern, wenn der Schritt des Prüfens erfolgreich war oder wenn das Senden der Freigabeinformation an das erste System 28 durchgeführt oder von dem ersten System 28 quittiert wurde.

Es ist möglich, dass bei Unterschreitung eines vorgebbaren Mindestbestands im virtuellen Lager automatisch eine Lagerbestandsinformation oder Bestellaufforderungsinformation von dem zweiten System 30 an das erste System 28 gesendet wird.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale der unabhängigen Ansprüche jeweils unabhängig voneinander offenbart. Zusätzlich sind auch die Merkmale der Unteransprüche unabhängig von sämtlichen Merkmalen der unabhängigen Ansprüche offenbart.

### Bezugszeichenliste

- 10: Industrieanlage
- 12: Industrieanlage
- 14: Lieferant
- 16: Lager
- 18: Recheninfrastruktur
- 20: additive Fertigungsvorrichtung
- 22: Lager
- 24: Recheninfrastruktur
- 26: Cloud-Infrastruktur
- 28: erstes System
- 30: zweites System
- F1-F3: Fertigungsproduktmaterialeinheit

## Patentansprüche

1. Verfahren zum Betreiben einer additiven Fertigungsvorrichtung (20), vorzugsweise einer Behälterbehandlungsanlage, zum additiven Fertigen eines Bauteils, wobei das Verfahren aufweist:
Senden einer Produktkennungsinformation, die eine Fertigungsmaterialprodukteinheit (F2), vorzugsweise eine Materialfilamentspule, einen Behälter mit Flüssigmaterial oder einen Behälter mit Pulvermaterial, identifiziert; und
Empfangen einer Freigabeinformation zum Freigeben der additiven Fertigungsvorrichtung (20) in Reaktion auf das Senden der Produktkennungsinformation.

2. Verfahren nach Anspruch 1, ferner aufweisend
Freigeben der additiven Fertigungsvorrichtung (20) zum additiven Fertigen des Bauteils mittels der Fertigungsmaterialprodukteinheit (F2), die von der Produktkennungsinformation identifiziert ist, in Abhängigkeit von der empfangenen Freigabeinformation; und optional:
additives Fertigen des Bauteils mittels der Fertigungsmaterialprodukteinheit (F2), die von der Produktkennungsinformation identifiziert ist, durch die freigegebene additive Fertigungsvorrichtung (20).

3. Verfahren nach Anspruch 1 oder Anspruch 2, ferner aufweisend:
Eingeben, Erfassen oder Auswählen der Produktkennungsinformation vor dem Senden der Produktkennungsinformation, wobei vorzugsweise:
die Produktkennungsinformation mittels einer Benutzerschnittstelle eingegeben wird oder eingebbar ist; oder
die Produktkennungsinformation mittels einer Sensorik oder einer Kommunikationsschnittstelle erfasst wird oder erfassbar ist; oder
die Produktkennungsinformation in einer Benutzeroberfläche ausgewählt wird oder auswählbar ist.

4. Verfahren nach einem der vorherigen Ansprüche, wobei:
die Fertigungsmaterialprodukteinheit (F2) aus einer Mehrzahl von Fertigungsmaterialprodukteinheiten (F1, F2, F3), die jeweils mit einer Produktkennungsinformation zum Identifizieren der jeweiligen Fertigungsmaterialprodukteinheit (F1, F2, F3) gekennzeichnet sind, ausgewählt ist.

5. Verfahren nach einem der vorherigen Ansprüche, ferner aufweisend mindestens eines von:
Auswählen eines additiv zu fertigenden Bauteils, das mittels einer Bauteilkennungsinformation identifiziert ist, in einer Bedienoberfläche;
Senden einer Bauteilkennungsinformation, die ein zum additiven Fertigen ausgewähltes Bauteil identifiziert; und
Senden einer Bauteilinformation, die mindestens ein Geometriemerkmal und/oder mindestens ein Materialangabemerkmal eines zum additiven Fertigen ausgewählten Bauteils angibt.

6. Verfahren nach Anspruch 5, wobei:
das Empfangen der Freigabeinformation ferner in Reaktion auf das Auswählen des additiv zu fertigenden Bauteils, das Senden der Bauteilkennungsinformation und/oder das Senden der Bauteilinformation erfolgt.

7. Verfahren nach einem der vorherigen Ansprüche, ferner aufweisend mindestens eines von:
Senden einer Materialverbrauchsinformation, die einen erfassten oder geschätzten Materialverbrauch der Fertigungsmaterialprodukteinheit (F2) beim additiven Fertigen des Bauteils aus der Fertigungsmaterialprodukteinheit (F2) angibt;
Senden einer Herstellungsfortschrittinformation, die einen Herstellungsfortschritt und/oder eine Fertigstellung des additiv zu fertigenden Bauteils angibt; und
Empfangen mindestens eines Betriebsparameters zum Betreiben der additiven Fertigungsvorrichtung (20) in Reaktion auf das Senden der Produktkennungsinformation und optional Betreiben der additiven Fertigungsvorrichtung (20) in Abhängigkeit von dem empfangenen mindestens einen Betriebsparameter.

8. Verfahren zum Überwachen eines Betriebs einer additiven Fertigungsvorrichtung (20), vorzugsweise einer Behälterbehandlungsanlage, zum additiven Fertigen eines Bauteils, wobei das Verfahren aufweist:
Empfangen einer Produktkennungsinformation, die eine Fertigungsmaterialprodukteinheit (F2), vorzugsweise eine Materialfilamentspule oder einen Behälter mit Flüssig- oder Pulvermaterial, identifiziert;
Prüfen der empfangenen Produktkennungsinformation und/oder mindestens einer der empfangenen Produktkennungsinformation zugeordneten Information; und
Senden einer Freigabeinformation in Abhängigkeit von dem Prüfen.

9. Verfahren nach Anspruch 8, wobei:
beim Prüfen der Produktkennungsinformation die Produktkennungsinformation auf Zulässigkeit, auf Übereinstimmung mit einem Eintrag in einer Liste von zulässigen Produktkennungsinformationen und/oder auf ein Vorhandensein in einem virtuellen Lager geprüft wird.

10. Verfahren nach Anspruch 8 oder Anspruch 9, ferner aufweisend:
Abrufen einer Ist-Produktinformation, die der empfangenen Produktkennungsinformation zugeordnet ist, vorzugsweise aus einer Datenbank, wobei die abgerufene Ist-Produktinformation geprüft wird.

11. Verfahren nach Anspruch 10, wobei:
das Prüfen der abgerufenen Ist-Produktinformation ein Prüfen einer Ist-Produktmaterialmengeninformation der Ist Produktinformation und/oder einer Ist-Produktmaterialangabeinformation der Ist-Produktinformation aufweist.

12. Verfahren nach Anspruch 10 oder Anspruch 11, wobei:
das Prüfen der abgerufenen Ist-Produktinformation in Bezug auf eine Soll-Produktinformation, vorzugsweise aufweisend eine Soll-Produktmaterialmengeninformation und/oder eine Soll-Produktmaterialangabeinformation, erfolgt.

13. Verfahren nach einem der Ansprüche 10 bis 12, ferner aufweisend:
Aktualisieren der Ist-Produktinformation, vorzugsweise der Ist-Produktmaterialmengeninformation, in Abhängigkeit von:
- dem Prüfen und/oder Senden;
- einem Empfangen einer Materialverbrauchsinformation;
- einem Empfangen einer Herstellungsfortschrittinformation; und/oder
- einer Soll-Produktmaterialmengeninformation.

14. Verfahren nach einem der Ansprüche 8 bis 13, ferner aufweisend mindestens eines von:
Empfangen einer Bauteilkennungsinformation, die ein zum additiven Fertigen ausgewähltes Bauteil identifiziert, und/oder einer Bauteilinformation, die mindestens ein Geometriemerkmal und/oder mindestens ein Materialmerkmal eines zum additiven Fertigen ausgewählten Bauteils angibt, wobei die Soll-Produktinformation abhängig von der empfangenen Bauteilkennungsinformation und/oder der empfangenen Bauteilinformation ist;
Senden mindestens eines Betriebsparameters zum Betreiben der additiven Fertigungsvorrichtung, wobei der mindestens eine Betriebsparameter abhängig von der empfangenen Produktkennungsinformation ist; und
Senden einer Lagerbestandsinformation oder einer Bestellaufforderungsinformation, wenn ein Lagerbestand in einem virtuellen Lager einen vorgebbaren Mindestlagerbestand erreicht oder unterschreitet.

15. System (28, 30), das dazu konfiguriert ist, ein Verfahren nach einem der vorherigen Ansprüche auszuführen.
